# EUROPÄISCHE PATENTSCHRIFT

(11) **EP 3 793 873 B1**
(45) Veröffentlichungstag und Bekanntmachung des Hinweises auf die Patenterteilung: **10.08.2022**
(21) Anmeldenummer: 19744649.5
(22) Anmeldetag: 17.07.2019
(51) Int. Cl.: B60T 13/68, B60T 17/18

(54) **DRUCKBEGRENZUNGSBAUGRUPPE ZUM EINSATZ IN HYDRAULISCHEN ODER PNEUMATISCHEN BREMSSYSTEMEN**
PRESSURE-LIMITING ASSEMBLY FOR USE IN HYDRAULIC OR PNEUMATIC BRAKE SYSTEMS
ENSEMBLE DE LIMITATION DE PRESSION DESTINÉ À ÊTRE UTILISÉ DANS DES SYSTÈMES DE FREINAGE HYDRAULIQUES OU PNEUMATIQUES

(30) Priorität: 18.07.2018 DE 102018117403
(43) Veröffentlichungstag der Anmeldung: 24.03.2021
(73) Patentinhaber: Siemag Tecberg GmbH, 35708 Haiger (DE)
(72) Erfinder: AUGUST, Sergej, 35708 Haiger / Kalteiche (DE); STÄRKLOW, Sergei, 35708 Haiger / Kalteiche (DE)
(74) Vertreter: Tegethoff, Sebastian
(86) Internationale Anmeldenummer: PCT/EP2019/069228
(87) Internationale Veröffentlichungsnummer: WO 2020/016289

(56) Entgegenhaltungen:
- DE-A1-102004 057 739
- DE-A1-102007 037 967

## Beschreibung

Die vorliegende Erfindung bezieht sich auf eine Druckbegrenzungsbaugruppe zum Einsatz in hydraulischen oder pneumatischen Bremssystemen von Schachtförderanlagen, wie durch den Oberbegriff des unabhängigen Anspruches 1 beschrieben.

In modernen Schachtförderanlagen, mit denen Tiefen von teilweise über tausend Metern erreicht werden, spielt die korrekte und in jeder Situation verlässliche Funktion der Bremsen der Schachtförderanlage eine maßgebende und zentrale Rolle.

Mit der stetig wachsenden Komplexität elektronischer Komponenten in Bremssystemen steigt auch die Möglichkeit von Fehlfunktionen. Ist eine sicherheitsrelevante Komponente von einer solchen Fehlfunktion betroffen, können im schlimmsten Fall Menschen zu Schaden kommen. Würde z. B. ein Steuergerät eines hydraulischen oder pneumatischen Bremssystems im Förderbetrieb der Schachtförderanlage unerwartet eine Vollbremsung auslösen, könnte dies zu erheblichen Schäden am Material, wie auch zu Verletzungen von Menschen, Tieren oder Umweltschäden führen.

Um das Risiko von Gefahr bringenden Fehlfunktionen von sicherheitsrelevanten elektrischen, elektronischen oder programmierbar elektronischen (E/E/PE) Systemen zu minimieren, sollten diese unter Berücksichtigung einschlägiger Normen entwickelt werden.

Funktionale Sicherheit bezeichnet den Teil der Sicherheit eines Systems, wie z.B. des Bremssystems einer Schachtförderanlage, der von der korrekten Funktion des sicherheitsbezogenen Systems und anderer risikomindernder Maßnahmen abhängt. Es steht also die Funktion im Fokus, daher der Begriff "funktionale Sicherheit". Dabei ist nachzuweisen, dass die E/E/PE - Systeme, hier die Bremsensteuerung, trotz steigender Komplexität sicher und zuverlässig die geforderte Funktionalität liefern.

Bedingt durch die weltweit immer wichtiger werdenden Anforderungen an die funktionale Sicherheit bei Maschinen und Anlagen, insbesondere auch bei Schachtförderanlagen, ist es erforderlich, technische Lösungen vorzuhalten, die Lücken bei der durch die Hersteller der Einzelkomponenten durchgeführten Standardbewertungen für die vorhandene funktionale Sicherheit erfüllen und eine zuverlässige Bewertung der Ausfallwahrscheinlichkeiten zulassen und so gefährliche Bremsungen vermeiden.

Bekannte Typen von Ventilen in hydraulischen oder pneumatischen Bremssystemen sind mechanisch fest einstellbare Druckbegrenzungsventile, proportional einstellbare Druckbegrenzungsventile oder auch proportional einstellbare Druckbegrenzungsventile mit Motorverstellung.

Diese Ventile haben unterschiedliche Nachteile. So können mechanische Druckbegrenzungsventile während des Betriebs nicht bedarfsgerecht verstellt werden. Proportional-Druckbegrenzungsventile fallen bei Abschalten der Stromversorgung entweder auf die minimale oder maximale Druckeinstellung ab, was in beiden Fällen zu katastrophalen Folgen für die Förderanlage bzw. die Menschen darin führen kann. Proportional-Druckbegrenzungsventile mit Motorverstellung schließlich haben unzureichende Werte für die Ausfallwahrscheinlichkeit (MTTFd nach ISO 13849).

Die Bewertungen von marktüblichen Komponenten, insbesondere von proportional einstellbaren Ventilen, d.h. von kontinuierlich verstellbaren Ventilen, die den Ausgangsdruck in Abhängigkeit von elektrischen Strom begrenzen, basiert in der Regel nur auf den jeweiligen Endwerten, d.h. dem Minimalwert bzw. Maximalwert, die den Zustand nach Abschalten der Spannungsversorgung darstellen, nicht jedoch den dazwischenliegenden Regelbereich, der aber für eine gesteuerte Abbremsung einer Förderanlage im Falle z. B. eines Stromausfalls von großer Bedeutung ist.

Ein weiterer Nachteil bisher bekannter Systeme mit fest einstellbaren Druckventilen liegt in der Notwendigkeit, für jedes einzustellende Druckniveau mehrere Ventile mit unterschiedlich voreingestellten Druckwerten einzusetzen, welche durch eine Steuerung immer auf den benötigten Wert vorgewählt werden.

DE 10 2004 057739 A1 offenbart eine Druckbegrenzungsbaugruppe zum Einsatz in einem hydraulisch oder pneumatisch betriebenen Bremssystem, welches durch eine Pumpe mit Druck zum Lösen der Bremse versorgt und zu einem Tank hin entlastet wird. Die Bremseinrichtung hat zumindest einen hydraulisch betätigten Bremszylinder, dessen Bremsdruck mittels eines stetig verstellbaren Wegeventils regelbar ist.

Die Aufgabe der vorliegenden Erfindung ist es daher, eine Druckbegrenzungsbaugruppe für den Einsatz in Bremssystemen vorzusehen, insbesondere solcher, die in Schachtförderanlagen, Abteufanlagen oder Not- bzw. Hilfsfahranlagen zum Einsatz kommen, die den Systemdruck im Bremssystem im Fehlerfall oder bei Anforderung auch im Falle eines Stromausfalles auf ein voreingestelltes Druckniveau, d.h. den Bremsdruck, schnell abbauen kann und anschließend diesen auf dem erreichten Niveau für eine vorgegebene Dauer, d.h. die Bremszeit, halten kann, um z.B. eine katastrophale Vollbremsung oder aber auch ein Abstürzen des Fördermittels zu verhindern.

Diese Aufgabe wird durch die Merkmale des unabhängigen Patentanspruches 1 gelöst, wobei zweckmäßige Ausführungsformen durch die Merkmale der Unteransprüche beschrieben sind.

Vorgesehen ist dabei eine Druckbegrenzungsbaugruppe zum Einsatz in maschinellen Bremssystemen, welche derart ausgestaltet ist, dass sie den Systemdruck auf ein voreingestelltes Druckniveau, d.h. den Bremsdruck, schnell abbaut und anschließend diesen auf dem Niveau für eine vorgegebene Dauer, insbesondere die Bremszeit, hält, wobei sich die Druckbegrenzungsbaugruppe dadurch auszeichnet, dass ihr Druckniveau während des Betriebes proportional verstellbar ist und beim Abschalten der Steuerspannung der proportional voreingestellte Druck im System durch die Druckbegrenzungsbaugruppe für eine definierte Bremsdauer gehalten wird, auch bei Abschalten bzw. Spannungsverlust der Ventile.

In einer bevorzugten Ausführungsform weist die Druckbegrenzungsbaugruppe eine Steuerung auf, zur freien Anpassung der proportionalen Verstellung des Drucks/Bremsdrucks mittels der Ventile entsprechend der aktuellen Betriebssituation.

Die Unterfunktion Druckabbau der Druckbegrenzungsbaugruppe ist vorzugsweise mehrkanalig ausgeführt, wie auch die Unterfunktion Druckhalten, um ein hohes Sicherheitsniveau zu erreichen.

Eine Druckbegrenzungsbaugruppe nach Maßgabe der Erfindung macht es möglich, dass die einzelnen Ausfallraten der Komponenten der Druckbegrenzungsbaugruppe, aber auch Ausfallraten für das System, nach dem Stand der Technik ermittelt werden können.

Die Anwendung kann hydraulisch oder pneumatisch ausgeführt werden.

Die Anwendung kann in einem Bremssystem für Friktionsfördermaschinen, aber auch in einem Bremssystem für Trommelfördermaschinen erfolgen.

Die Speicherung des Druckes im System kann dabei durch einen Energiespeicher (pneumatisch, mechanisch oder sonstige energiespeichernde Methoden) erfolgen.

Im Konkreten ist nach Maßgabe der Erfindung eine Druckbegrenzungsbaugruppe zum Einsatz in hydraulisch oder pneumatisch betriebenen maschinellen Bremssystemen vorgesehen, welches durch eine Pumpe mit Druck zum Lösen der Bremse versorgt und zum Abbremsen zu einem Tank hin entlastet wird, wobei die Druckbegrenzungsbaugruppe aus zumindest einem in stromlosem Zustand geöffneten Schaltventil sowie zumindest einer zwischen Schaltventil und Tank vorgesehenen, auf einen definierten Bremsdruck einstellbaren, Druckhalteanordnung besteht, zum schnellen Abbau des Systemdrucks auf ein voreingestelltes Druckniveau und anschließendes Halten auf dem Niveau für eine vorgegebene Dauer.

In einer bevorzugten Ausführungsform besteht die zumindest eine Druckhalteanordnung aus einem durch die Pumpe druckbeaufschlagten, proportional einstellbaren und in stromlosem Zustand geschlossenem Ventil sowie einem Druckhalteventil, dessen Druckhalteniveau über das proportional einstellbare Ventil gesteuert ist. Weiterhin kann die Druckhalteanordnung mit einem zwischen Druckhalteventil und proportional einstellbarem Ventil angeordneten Druckspeicher, zum Ausgleich von Leckagen, sowie einem Drucksensor zur Steuerung des einstellbaren Ventils versehen sein.

Die Druckbegrenzungsbaugruppe kann auch derart ausgestaltet sein, dass eine Mehrzahl von Druckhalteanordnungen, weiter bevorzugt vier, vorgesehen sind, die ebenso bevorzugt von einer Mehrzahl, vorzugsweise zwei, von in stromlosem Zustand geöffneten Schaltventilen angesteuert werden.

Weitere Eigenschaften und Merkmale der Erfindung ergeben sich aus der folgenden, nicht beschränkenden, Beschreibung eines Teilsteuerschemas einer Druckbegrenzungsbaugruppe einer Bremse gemäß der Erfindung.

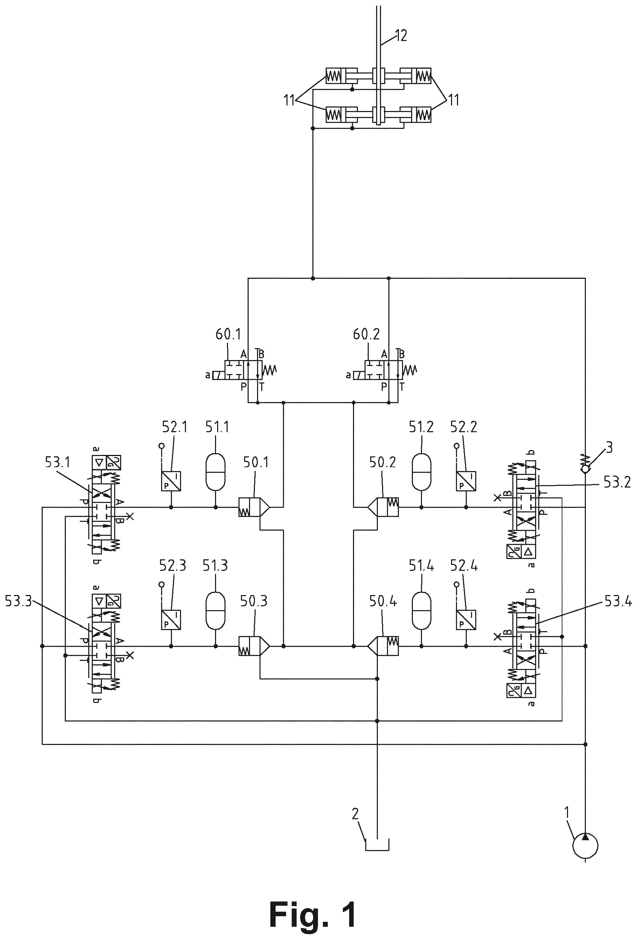

Die Fig. 1 zeigt dabei zunächst eine vorzugsweise hydraulische Bremse mit einer Bremsscheibe 12 und vier Bremskolben 11, die im Normalzustand durch Federn wie dargestellt gegen die Bremsscheibe 12 gedrückt werden. Um die Bremse zu lösen, werden die Zylinder pneumatisch oder hydraulisch mit Druck beaufschlagt, so dass die Bremskolben abgehoben werden. Fällt die Druckversorgung aus, bremst das System automatisch ab.

Die Ventile Pos. 50.1 bis 53.1 und 50.3 bis 53.3 (Kanal 1) sowie die Ventile Pos. 50.2 bis 53.2 und 50.4 bis 53.4 (Kanal 2) bilden die Funktion Druckabbau.

Die Ventile Pos. 50.1 bis 53.1 und 50.2 bis 53.2 (Kanal 1) sowie die Ventile Pos. 50.3 bis 53.3 und 50.4 bis 53.4 (Kanal 2) bilden die Funktion Druckhalten.

Die proportionale Druckeinstellung erfolgt durch die Ventile 53.1 bis 53.4.

Dadurch wird ein definierter Druck zwischen den Ventilen 53.1 bis 53.4 und 50.1 bis 50.4, sowie in den Speichern 51.1 bis 51.4 eingestellt und bei Spannungsverlust am Regelventil 53.1 bis 53.4 oder weitere Sperrventile (nicht dargestellt) gehalten.

Die Speicher 51.1 bis 51.4 dienen zum Ausgleich von Leckagen und ermöglichen die Regelbewegung der Ventile Pos. 50.1 bis 50.4.

Der eingestellte Druck wird über die Drucksensoren 52.1 bis 52.4 ermittelt und überwacht, welche der Steuerung der Regelventile 53.1 bis 53.4 dienen.

Im Betrieb wird das System durch die Pumpe 1 mit Druck versorgt und zum Tank 2 hin entlastet. Eine Rückschlagventileinheit 3 verhindert dabei den Druckabbau Richtung Pumpe.

Durch die Schaltventile 60.1 und 60.2 wird die Schaltung zum Druckabbau mit anschließendem Druckhalten aktiviert.

Die Schaltventile Pos. 60.1 und 60.2 werden im Normalbetrieb angesteuert und sperren den Weg zu den Druckbegrenzungsbaugruppen 50 bis 53. Die Pumpe 1 baut Druck auf und lüftet die Bremselemente 11, so dass sich die Bremsscheibe 12 drehen kann.

Der Druck der Druckbegrenzungsbaugruppe wird dabei über die Ventile 50.X bis 53.X kontinuierlich und betriebsbedingt geregelt. Wird nun eine Notbremsung angefordert oder fällt der Strom aus, werden die Schaltventile 60.1 und 60.2 spannungslos geschaltet und so geöffnet. Gleichzeitig werden die Ventile 53.X spannungslos geschaltet und somit geschlossen, so dass der eingestellte Druck in der Druckbegrenzungsbaugruppe gehalten wird.

## Patentansprüche

1. Druckbegrenzungsbaugruppe zum Einsatz in einem hydraulisch oder pneumatisch betriebenen, maschinellen Bremssystem, welches durch eine Pumpe (1) mit Druck zum Lösen der Bremse versorgt und zu einem Tank (2) hin entlastet wird, **dadurch gekennzeichnet, dass** die Druckbegrenzungsbaugruppe aus zumindest einem in stromlosem Zustand geöffneten Schaltventil (60.1, 60.2) sowie zumindest einer zwischen Schaltventil (60.1, 60.2) und Tank (2) vorgesehenen, auf einen definierten Bremsdruck einstellbaren, Druckhalteanordnung besteht, zum schnellen Abbau des Systemdrucks auf ein voreingestelltes Druckniveau und anschließendes Halten auf dem Niveau für eine vorgegebene Dauer, wobei die zumindest eine Druckhalteanordnung aus einem durch die Pumpe (1) druckbeaufschlagten, proportional einstellbaren und in stromlosem Zustand geschlossenem Ventil (53.1, 53.2, 53.3, 53.4), sowie einem Druckhalteventil (50.1, 50.2, 50.3, 50.4) besteht, dessen Druckhalteniveau über das proportional einstellbare Ventil (53.1, 53.2, 53.3, 53.4) gesteuert ist.

2. Druckbegrenzungsbaugruppe nach Anspruch 1, **dadurch gekennzeichnet, dass** die Druckhalteanordnung mit einem zwischen Druckhalteventil (50.1, 50.2, 50.3, 50.4) und proportional einstellbarem Ventil (53.1, 53.2, 53.3, 53.4) angeordneten Druckspeicher (51.1, 51.2, 51.3, 51.4) sowie einem Drucksensor (52.1, 52.2, 52.3, 52.4) zur Steuerung des einstellbaren Ventils (53.1, 53.2, 53.3, 53.4) versehen ist.

3. Druckbegrenzungsbaugruppe nach einem der vorhergehenden Ansprüche, **dadurch gekennzeichnet, dass** eine Mehrzahl von Druckhalteanordnungen vorgesehen ist.

4. Druckbegrenzungsbaugruppe nach einem der vorhergehenden Ansprüche, **dadurch gekennzeichnet, dass** eine Mehrzahl von in stromlosem Zustand geöffneten Schaltventilen (60.1, 60.2) vorgesehen sind.

5. Verfahren zur Druckbegrenzung in einem hydraulisch oder pneumatisch betriebenen maschinellen Bremssystem, welches durch eine Pumpe (1) mit Druck zum Lösen der Bremse versorgt und zum Abbremsen zu einem Tank (2) hin entlastet wird, **dadurch gekennzeichnet, dass** wenn die Druckversorgung ausfällt, das System automatisch abbremst, mit den Schritten
a. Vorsehen einer Druckbegrenzungsbaugruppe aus zumindest einem in stromlosem Zustand geöffneten Schaltventil (60.1, 60.2) sowie zumindest einer zwischen Schaltventil (60.1, 60.2) und Tank (2) angeordneten, auf einen definierten Bremsdruck einstellbaren, Druckhalteanordnung, mit einem durch die Pumpe (1) druckbeaufschlagten, proportional einstellbaren und in stromlosem Zustand geschlossenem Ventil (53.1, 53.2, 53.3, 53.4) sowie einem Druckhalteventil (50.1, 50.2, 50.3, 50.4), dessen Druckhalteniveau über das proportional einstellbare Ventil (53.1, 53.2, 53.3, 53.4) gesteuert ist;
b. Ansteuerung der Schaltventile (60.1, 60.2) im Normalbetrieb zur Sperrung des Weges zu der zumindest einen Druckbegrenzungsanordnung (50 bis 53),
c. Druckaufbau durch die Pumpe (1) und lüften der Bremselemente (11) zum Lösen der Bremse (11, 12);
d. kontinuierliche, betriebsbedingte Regelung des Drucks in der zumindest einen Druckbegrenzungsbaugruppe über das proportional einstellbare Ventil (53.1, 53.2, 53.3, 53.4);
e. im Falle einer Notbremsung oder eines Stromausfalles, Spannungslosschalten und daraus folgendes Öffnen der Schaltventile (60.1; 60.2) bei gleichzeitigem Spannungslosschalten und daraus folgendem Schließen des proportional einstellbaren Ventils (53.1, 53.2, 53.3, 53.4), so dass der eingestellte Druck in der Druckbegrenzungsbaugruppe mittels des Druckhalteventils (50.1, 50.2, 50.3, 50.4) gehalten wird.

6. Verfahren zur Druckbegrenzung in einem hydraulisch oder pneumatisch betrieben maschinellen Bremssystemen nach Anspruch 5, wobei zwischen dem proportional einstellbaren Ventil (53.1, 53.2, 53.3, 53.4) und dem Druckhalteventil (50.1, 50.2, 50.3, 50.4) Speicher (51.1, 51.2, 51.3, 51.4) zum Ausgleich von Leckagen vorgesehen sind, welche die Regelbewegung des Druckhalteventils (50.1, 50.2, 50.3, 50.4) ermöglichen.

7. Verfahren zur Druckbegrenzung in einem hydraulisch oder pneumatisch betrieben maschinellen Bremssystemen nach Anspruch 5 oder 6, wobei der eingestellte Druck in der Druckhalteanordnung über einen Drucksensor (52.1, 52.2, 52.3, 52.4) ermittelt und überwacht wird, wobei der ermittelte Druck die Grundlage für die Regelung des proportional einstellbaren Ventil (53.1, 53.2, 53.3, 53.4) bildet.

## Claims

1. Pressure relief assembly for use in a hydraulically or pneumatically operated mechanical brake system which is supplied with pressure by a pump (1) for releasing the brake and is relieved towards a tank (2), **characterized in that** the pressure relief assembly consists of at least one switching valve (60. 1, 60.2) open in the de-energized state and at least one pressure holding arrangement provided between the switching valve (60.1, 60.2) and the tank (2) and adjustable to a defined brake pressure, for rapid reduction of the system pressure to a preset pressure level and subsequent holding at that level for a predetermined duration, wherein the at least one pressure-maintaining arrangement comprises a valve (53.1, 53.2, 53.3, 53.4) which is pressurized by the pump (1), is proportionally adjustable and is closed in the de-energized state, and a pressure-maintaining valve (50.1, 50.2, 50.3, 50.4) whose pressure-maintaining level is controlled via the proportionally adjustable valve (53.1, 53.2, 53.3, 53.4).

2. Pressure relief assembly according to claim 1, **characterized in that** the pressure holding arrangement is provided with a pressure accumulator (51.1, 51.2, 51.3, 51.4) arranged between pressure holding valve (50.1, 50.2, 50.3, 50.4) and proportionally adjustable valve (53. 1, 53.2, 53.3, 53.4) and a pressure sensor (52.1, 52.2, 52.3, 52.4) for controlling the adjustable valve (53.1, 53.2, 53.3, 53.4).

3. Pressure relief assembly according to any one of the preceding claims, **characterized in that** a plurality of pressure retaining assemblies is provided.

4. Pressure relief assembly according to any one of the preceding claims, **characterized in that** a plurality of switching valves (60.1, 60.2) open in the de-energized state are provided.

5. Method for pressure limitation in a hydraulically or pneumatically operated mechanical braking system, which is supplied with pressure by a pump (1) for releasing the brake and is relieved towards a tank (2) for braking, **characterized in that** if the pressure supply fails, the system brakes automatically, with the steps of
a. providing a pressure relief assembly comprising at least one switching valve (60.1, 60.2) which is open in the de-energized state and at least one pressure holding arrangement which is arranged between the switching valve (60.1, 60.2) and the tank (2) and can be set to a defined braking pressure, having a valve (53. 1, 53.2, 53.3, 53.4), which is pressurized by the pump (1) and closed in the de-energized state, and a pressure-maintaining valve (50.1, 50.2, 50.3, 50.4), the pressure-maintaining level of which is controlled via the proportionally adjustable valve (53.1, 53.2, 53.3, 53.4);
b. controling the switching valves (60.1, 60.2) in normal operation to block the path to the at least one pressure relief arrangement (50 to 53),
c. pressure build-up by the pump (1) and release of the brake elements (11) to release the brake (11, 12);
d. continuous, operational regulation of the pressure in the at least one pressure relief assembly via the proportionally adjustable valve (53.1, 53.2, 53.3, 53.4);
e. in the event of emergency braking or power failure, de-energizing and consequent opening of the switching valves (60.1; 60.2) with simultaneous de-energizing and consequent closing of the proportionally adjustable valve (53.1, 53.2, 53.3, 53.4) so that the set pressure in the pressure relief assembly is maintained by means of the pressure maintaining valve (50.1, 50.2, 50.3, 50.4).

6. Method for pressure limitation in a hydraulically or pneumatically operated mechanical braking system according to claim 5, wherein accumulators (51.1, 51.2, 51.3, 51.4) are provided between the proportionally adjustable valve (53.1, 53.2, 53.3, 53.4) and the pressure retaining valve (50.1, 50.2, 50.3, 50.4) for compensating leakages, which accumulators allow the control movement of the pressure retaining valve (50.1, 50.2, 50.3, 50.4).

7. Method for pressure limitation in a hydraulically or pneumatically operated mechanical braking system according to claim 5 or 6, wherein the set pressure in the pressure holding arrangement is determined and monitored by means of a pressure sensor (52.1, 52.2, 52.3, 52.4), the determined pressure forming the basis for controlling the proportionally adjustable valve (53.1, 53.2, 53.3, 53.4).

## Revendications

1. Ensemble de limitation de pression destiné à être utilisé dans un système de freinage mécanique à actionnement hydraulique ou pneumatique, qui est alimenté en pression par une pompe (1) pour le desserrage du frein et est déchargé vers un réservoir (2), **caractérisé en ce que** l'ensemble de limitation de pression est constitué d'au moins une soupape de commutation (60.1, 60.2) ouverte à l'état hors tension et d'au moins un dispositif de maintien de la pression prévu entre la soupape de commutation (60.1, 60. 2) et le réservoir (2) et réglable à une pression de freinage définie, pour la réduction rapide de la pression du système à un niveau de pression prédéfini et le maintien subséquent à ce niveau pendant une durée prédéterminée, dans lequel le au moins un dispositif de maintien de la pression comprend une soupape (53.1, 53. 2, 53.3, 53.4) alimentée en pression par la pompe (1), réglable proportionnellement et fermée à l'état hors tension, et une soupape de maintien de la pression (50.1, 50.2, 50.3, 50.4) dont le niveau de maintien de la pression est commandé par la soupape réglable proportionnellement (53.1, 53.2, 53.3, 53.4).

2. Ensemble de limitation de pression selon la revendication 1, **caractérisé en ce que** le dispositif de maintien de la pression est pourvu d'un accumulateur de pression (51.1, 51.2, 51.3, 51.4) disposé entre la soupape de maintien de pression (50.1, 50.2, 50.3, 50.4) et la soupape réglable proportionnellement (53.1, 53.2, 53.3, 53.4) et un capteur de pression (52.1, 52.2, 52.3, 52.4) pour commander la soupape réglable (53.1, 53.2, 53.3, 53.4).

3. Ensemble de limitation de pression selon l'une quelconque des revendications précédentes, **caractérisé en ce qu'**il est prévu une pluralité de dispositifs de maintien de pression.

4. Ensemble de limitation de pression selon l'une quelconque des revendications précédentes, caractérisé en qu'une pluralité de soupapes de commutation (60.1, 60.2) ouvertes à l'état hors tension sont prévues.

5. Procédé de limitation de pression dans un système de freinage mécanique à commande hydraulique ou pneumatique, qui est alimenté en pression par une pompe (1) pour le desserrage du frein et est déchargé vers un réservoir (2) pour le freinage, **caractérisé en ce que**, en cas de défaillance de l'alimentation en pression, le système freine automatiquement, avec les étapes suivantes
a. a. prévoir un ensemble de limitation de pression comprenant au moins une soupape de commutation (60.1, 60.2) ouverte à l'état hors tension et au moins un dispositif de maintien de pression disposé entre la soupape de commutation (60.1, 60.2) et le réservoir (2) et pouvant être réglé à une pression de freinage définie, avec une soupape (53. 1, 53.2, 53.3, 53.4), qui est alimentée en pression par la pompe (1) et fermée à l'état hors tension, et une soupape de maintien de pression (50.1, 50.2, 50.3, 50.4), dont le niveau de maintien de pression est commandé par la soupape à réglage proportionnel (53.1, 53.2, 53.3, 53.4);
b. commander les soupapes de commutation (60.1, 60.2) en fonctionnement normal pour bloquer le chemin vers le au moins un dispositif de limitation de pression (50 à 53);
c. montée en pression par la pompe (1) et desserrage des éléments de freinage (11) pour libérer le frein (11, 12);
d. la régulation continue et opérationnelle de la pression dans le au moins un ensemble de limitation de pression par l'intermédiaire de la soupape à réglage proportionnel (53.1, 53.2, 53.3, 53.4);
e. en cas de freinage d'urgence ou de panne de courant, la désalimentation et l'ouverture consécutive des soupapes de commutation (60.1; 60.2) avec désalimentation simultanée et fermeture consécutive de la soupape à réglage proportionnel (53.1, 53.2, 53.3, 53.4) de sorte que la pression de consigne dans le dispositif de limitation de pression soit maintenue au moyen de la soupape de maintien de pression (50.1, 50.2, 50.3, 50.4).

6. Procédé de limitation de pression dans un système de freinage mécanique à commande hydraulique ou pneumatique selon la revendication 5, dans lequel des accumulateurs (51.1, 51.2, 51.3, 51.4) sont prévus entre la soupape à réglage proportionnel (53.1, 53.2, 53.3, 53.4) et la soupape de maintien de pression (50.1, 50.2, 50.3, 50.4) pour compenser les fuites, lesquels accumulateurs permettent le mouvement de commande de la soupape de maintien de pression (50.1, 50.2, 50.3, 50.4).

7. Procédé de limitation de pression dans un système de freinage mécanique à commande hydraulique ou pneumatique selon la revendication 5 ou 6, dans lequel la pression de consigne dans le dispositif de maintien de pression est déterminée et surveillée au moyen d'un capteur de pression (52.1, 52.2, 52.3, 52.4), la pression déterminée constituant la base de la commande de la soupape à réglage proportionnel (53.1, 53.2, 53.3, 53.4).
